# EUROPEAN PATENT SPECIFICATION

(11) **EP 4 389 517 B1**
(45) Date of publication and mention of the grant of the patent: **18.02.2026**
(21) Application number: 23187153.4
(22) Date of filing: 24.07.2023
(51) Int. Cl.: B60N 2/28

(54) **HEADREST ADJUSTMENT MECHANISM AND SEAT**
MECHANISMUS ZUR KOPFSTÜTZENEINSTELLUNG UND SITZ
MÉCANISME DE RÉGLAGE D'APPUI-TÊTE ET SIÈGE

(30) Priority: 20.12.2022 CN 202211643701
(43) Date of publication of application: 26.06.2024
(73) Proprietor: Ningbo Baby First Baby Products Co., Ltd., Ningbo, Zhejiang 315412 (CN)
(72) Inventor: GUO, Yi, Ningbo, Zhejiang, 315412 (CN); YANG, Gang, Ningbo, Zhejiang, 315412 (CN); ZHOU, Xiaolin, Ningbo, Zhejiang, 315412 (CN)
(74) Representative: Santarelli

(56) References cited:
- US-A1- 2020 398 711
- US-B2- 9 114 739

## Description

### Technical Field

The present invention relates to the technical field of seats, and in particular to a headrest adjustment mechanism and a seat.

### Background Art

In order for a seat headrest to be adapted to occupants of different heights, it is generally necessary to make the headrest adjustable in a liftable manner and to lock the adjusted headrest by a limiting member. In child safety seats, the mounting height of the headrest has a direct impact on the safety of the seating child. If the limiting member is displaced due to a collision in the event of a collision of a vehicle, the headrest may be loosened, thereby causing a deviation in the mounting height of the headrest and affecting the safety protection performance of the seat.

Patent document US20200398711 A1 discloses a headrest height adjustment mechanism for child safety seats that offers high reliability for locking and unlocking, facilitating single-handed operation and comfort adjustment for growing children.

Patent document US 9114739 B2 discloses a child car seat designed with a vertically adjustable headrest to accommodate the growth of a child. The seat features an innovative adjustment mechanism that includes an actuator, a lock element, and slide rails. This mechanism allows the headrest to be locked securely in place or unlocked for height adjustment. The lock element is engaged or disengaged using the actuator, which can be moved to different positions to block, unblock, or release the lock element, ensuring that the headrest remains stable and secure during normal use and in the event of a crash.

### Summary of the Invention

An object of the present invention is to provide a headrest adjustment mechanism and a seat to alleviate the technical problem in the prior art that an external collision may cause a failure of locking of the position of a headrest.

The invention is a headrest adjustment mechanism according to independent claim 1. Optional features are defined in claims dependent thereon.

Optionally, an elastic device is connected between the driving member and the limiting member; and
the elastic device is configured to make the limiting member tend to be locked in the snap position and to reset the driving member, so that the headrest adjustment mechanism has a tendency to switch from the unlocked state to the locked state.

Optionally, the limiting member is hinged to the headrest, and the limiting member is provided with a snap block portion that is adapted to the snap position;
in the locked state, the snap block portion is engaged with the snap position; and
in the unlocked state, the snap block portion is disengaged from the snap position.

In combination with this, optionally, a first inclined surface is provided at the bottom of the snap block portion, and the first inclined surface is inclined from bottom to top in a direction close to the mounting bracket; and
under the condition in which the headrest is pressed under an external force, the headrest drives the limiting member, and the first inclined surface abuts against the snap position, so as to move the snap block portion in a direction of disengagement from the snap position.

Optionally, the limiting member is provided with a second inclined surface, and the second inclined surface faces the driving member; and,
the driving member is provided with a third inclined surface, and the third inclined surface faces the limiting member; and
the second inclined surface and the third inclined surface are inclined away from an unlocking direction of the limiting member from bottom to top.

In connection with this, optionally, in the locked state, there is a free travel gap between the driving member and the limiting member; and
the free travel gap is located between the second inclined surface and the driving member, between the third inclined surface and the limiting member, or between the second inclined surface and the third inclined surface.

In connection with this, optionally,
the free travel gap gradually decreases during switching from the locked state to the unlocked state; and
when the free travel gap decreases to zero, the locking portion is disengaged from the driving member.

Optionally,
the mounting bracket is provided with a sliding slot, and the sliding slot extends from bottom to top;
the plurality of snap positions are disposed at intervals along the sliding slot; and the limiting member is slidable inside the sliding slot.

Also, a seat provided by the present invention is provided with a headrest adjustment mechanism as described above.

The present invention has brought the following beneficial effects: the headrest is movably connected to the mounting bracket, the mounting bracket is provided with the plurality of snap positions adapted to the limiting member, the plurality of snap positions are disposed at intervals along the moving track of the headrest, the limiting member is provided with the locking portion, the limiting member is movably connected to the headrest, and the driving member is in transmission connection with the limiting member, so that the headrest adjustment mechanism has the locked state and the unlocked state; in the locked state, the limiting member is engaged with any one of the snap positions, and the locking portion is engaged with the driving member, so as to restrict the movement of the limiting member; and in the unlocked state, the locking portion is disengaged from the driving member, and the driving member drives the limiting member to move to disengage the limiting member from the snap position. In the locked state, the driving member can prevent the limiting member from loosening, thereby avoiding the loosening of the headrest due to an external collision, and improving the stability of the headrest.

In order to make the above-mentioned objects, features and advantages of the present invention more obvious and easy to understand, a preferred embodiment is given below, and detailed as follows in conjunction with the accompanying drawings.

### Brief Description of the Drawings

In order to more clearly illustrate the technical solutions in a specific embodiment of the present invention, the accompanying drawings are briefly introduced in the following.
FIG. 1 is an exploded view of a headrest adjustment mechanism according to an embodiment of the present invention;
FIG. 2 is a schematic diagram of a mounting bracket of the headrest adjustment mechanism according to the embodiment of the present invention;
FIG. 3 is a partial cross-sectional view of the headrest adjustment mechanism according to the embodiment of the present invention in a locked state;
FIG. 4 is a partial cross-sectional view of the headrest adjustment mechanism according to the embodiment of the present invention with a locking portion being disengaged from a driving member;
FIG. 5 is a partial cross-sectional view of the headrest adjustment mechanism according to the embodiment of the present invention in an unlocked state;
FIG. 6 is a schematic diagram of a limiting member of the headrest adjustment mechanism according to the embodiment of the present invention; and
FIG. 7 is a schematic diagram of the driving member of the headrest adjustment mechanism according to the embodiment of the present invention.

List of reference signs: 100 - Mounting bracket; 101 - Snap position; 102 - Sliding slot; 200 - Headrest; 300 - Driving member; 301 - Third inclined surface; 310 - Handle ring; 320 - Strip; 330 - Lock release slider; 400 - Limiting member; 401 - Locking portion; 402 - Snap block portion; 421 - First inclined surface; 403 - Second inclined surface; 500 - Elastic device.

### Detailed description of an Embodiment

The technical solutions of the present invention will be clearly and completely described below with reference to the accompanying drawings.

In the description of the present invention, it should be noted that an orientation or positional relationship indicated by the term "center", "upper", "lower", "left", "right", "vertical", "horizontal", "inner", "outer" or the like is based on the orientation or positional relationship shown in the accompanying drawings, which is only for convenience of describing the present invention and simplifying the description.

In the description of the present invention, it should be noted that unless otherwise explicitly specified and defined, the terms "mounting", "connecting" and "connection" should be understood in a broad sense, for example, they may be a fixed connection, a detachable connection, or an integrated connection; or may be a mechanical connection or an electrical connection; or may be a direct connection, an indirect connection by means of an intermediate medium, or internal communication between two elements. For those of ordinary skill in the art, the specific meanings of the terms mentioned above in the present invention should be construed according to specific circumstances.

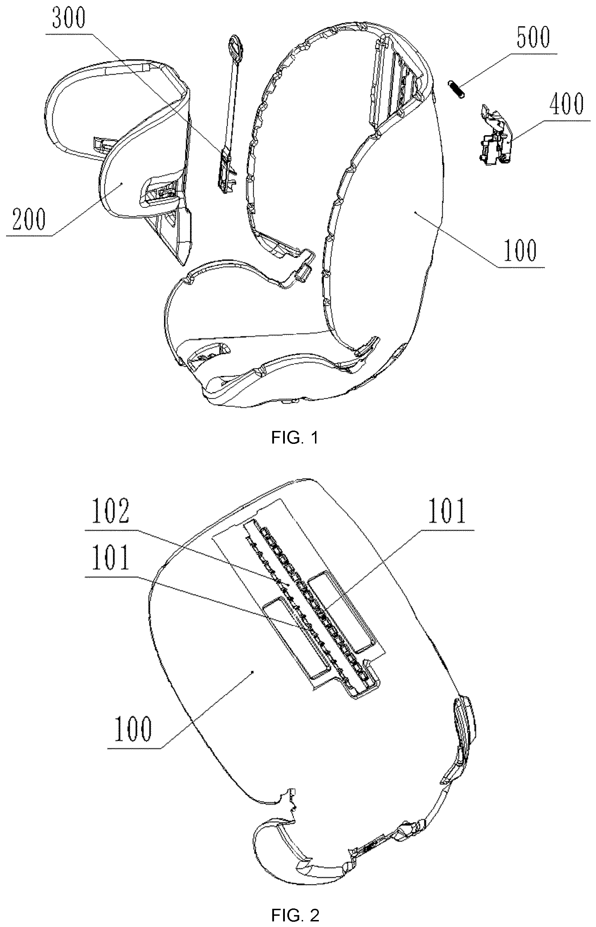

As shown in FIGS. 1, 2, 3, 4 and 5, a headrest adjustment mechanism provided by an embodiment of the present invention includes: a mounting bracket 100, a headrest 200, a driving member 300 and a limiting member 400. The headrest 200 is movably connected to the mounting bracket 100. The mounting bracket 100 is provided with a plurality of snap positions 101 adapted to the limiting member 400, and the plurality of snap positions 101 are disposed at intervals along a moving track of the headrest 200. The limiting member 400 is provided with a locking portion 401, the limiting member 400 is movably connected to the headrest 200, and the driving member 300 is in transmission connection with the limiting member 400 to enable the headrest adjustment mechanism to have a locked state and an unlocked state.

In the locked state, the limiting member 400 is engaged with any one of the snap positions 101, and the locking portion 401 is engaged with the driving member 300, so as to restrict a movement of the limiting member 400.

In the unlocked state, the locking portion 401 is disengaged from the driving member 300, and the driving member 300 drives the limiting member 400 to move to disengage the limiting member 400 from the snap position 101.

Optionally, the driving member 300 may be configured as an electrically controlled power device that drives a movable member by means of an electric motor or hydraulic telescopic cylinder and is in transmission connection with the limiting member 400 by means of the movable member.

In the present embodiment, the driving member 300 is slidably connected to the headrest 200 in a top-down direction, so that the driving member 300 tends to descend under the action of gravity. When the driving member 300 descends to the lowest position of travel, the driving member 300 drives the limiting member 400 to be engaged with any one of the snap positions 101 by pushing or linkage transmission, and the locking portion 401 is engaged with the driving member 300 by abutting or inserting. The driving member 300 limits the locking portion 401, so that the limiting member 400 is locked, and the disengagement of the limiting member 400 from the snap position 101 due to an external collision is prevented, thereby ensuring that the position of the headrest 200 is locked firmly.

In addition, optionally, the driving member 300 may slide along the mounting bracket 100 or the headrest 200, and the driving member 300 is in interference fit with a slideway, so that the driving member 300 may be fixed at any position on the slideway, and thus the headrest adjustment mechanism is locked in the locked state or in the unlocked state.

In the embodiment of the present invention, an elastic device 500 is connected between the driving member 300 and the limiting member 400. The elastic device 500 is configured to make the limiting member 400 tend to be locked to the snap position 101 and to reset the driving member 300, so that the headrest adjustment mechanism has a tendency to switch from the unlocked state to the locked state. The elastic device 500 may drive the limiting member 400 to be locked to any one of the snap positions 101, and the elastic device 500 may also return the driving member 300, so that the driving member 300 is engaged with the locking portion 401, thereby ensuring that the limiting member 400 is locked firmly.

As shown in FIGS. 1, 2, 3, 4, 5 and 6, the limiting member 400 is hinged to the headrest 200, and the limiting member 400 is provided with a snap block portion 402 that is adapted to the snap position 101.

In the locked state, the snap block portion 402 is engaged with the snap position 101. In the unlocked state, the snap block portion 402 is disengaged from the snap position 101.

Specifically, the snap position 101 includes a limiting projection or a limiting snap slot, and in the locked state, the snap block portion 402 abuts against the limiting projection or is inserted into the limiting snap slot, so that the position of the limiting member 400 with respect to the mounting bracket 100 can be stabilized. Under the condition in which the limiting member 400 is mounted to the headrest 200, the position of the headrest 200 with respect to the mounting bracket 100 is fixed.

It should be noted that the mounting bracket 100 may be configured as a bracket connected to a seat back, or the mounting bracket 100 may also be configured as a seat back body, so that the headrest 200 is directly mounted on the seat back.

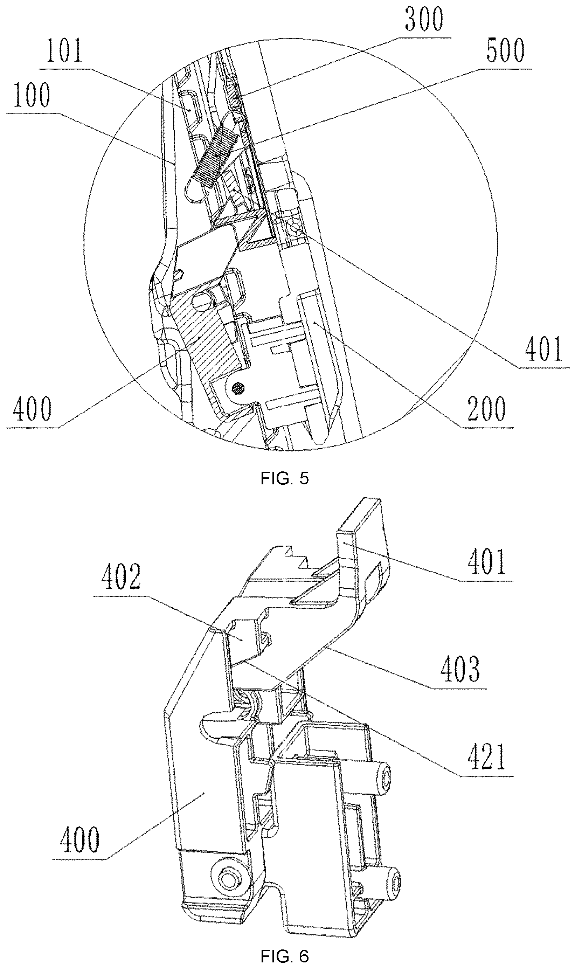

Further, a first inclined surface 421 is provided at the bottom of the snap block portion 402, and the first inclined surface 421 is inclined from bottom to top in a direction close to the mounting bracket 100 (see FIG. 6).

When the locking portion 401 is disengaged from the driving member 300 and the headrest 200 is pressed under an external force, the headrest 200 drives the limiting member 400 to move downward, and the first inclined surface 421 abuts against the snap position 101, so that the reaction force acting on the first inclined surface 421 can drive the snap block portion 402 to disengage from the snap position 101. As a result, pressing the headrest 200 can lower the mounting position with respect to the mounting bracket 100.

As shown in FIGS. 1, 3, 4, 5, 6 and 7, the limiting member 400 is provided with a second inclined surface 403, and the second inclined surface 403 faces the driving member 300. Alternatively, the driving member 300 is provided with a third inclined surface 301, and the third inclined surface 301 faces the limiting member 400.

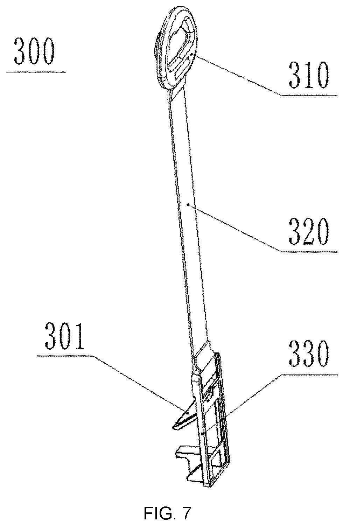

The second inclined surface 403 and the third inclined surface 301 are inclined away from an unlocking direction of the limiting member 400 from bottom to top. Referring to FIGS. 6 and 7, the second inclined surface 403 and the third inclined surface 301 are inclined to the right from bottom to top. When the driving member 300 drives the limiting member 400 to unlock, the second inclined surface 403 abuts against the driving member 300, or the third inclined surface 301 abuts against the limiting member 400, and the limiting member 400 is subjected to an acting force from the driving member 300 that can drive the limiting member 400 to unlock, thereby disengaging the limiting member 400 from the snap position 101.

Optionally, the limiting member 400 is provided with the second inclined surface 403, the driving member 300 is provided with the third inclined surface 301, and the second inclined surface 403 is disposed opposite the third inclined surface 301. When the driving member 300 drives the limiting member 400 to unlock, the second inclined surface 403 and the third inclined surface 301 are attached to each other and slide relative to each other, so that the limiting member 400 can be driven to unlock. The increased contact area between the driving member 300 and the limiting member 400 can not only avoid local severe wear, but can also make the transmission more stable.

Further, in the locked state, there is a free travel gap between the driving member 300 and the limiting member 400.

When the driving member 300 has no third inclined surface 301, a free travel gap is formed between the second inclined surface 403 and the driving member 300. When the limiting member 400 has no second inclined surface 403, a free travel gap is formed between the third inclined surface 301 and the limiting member 400. In a preferred embodiment, the limiting member 400 is provided with the second inclined surface 403, the driving member 300 is provided with the third inclined surface 301, and a free travel gap is formed between the second inclined surface 403 and the third inclined surface 301.

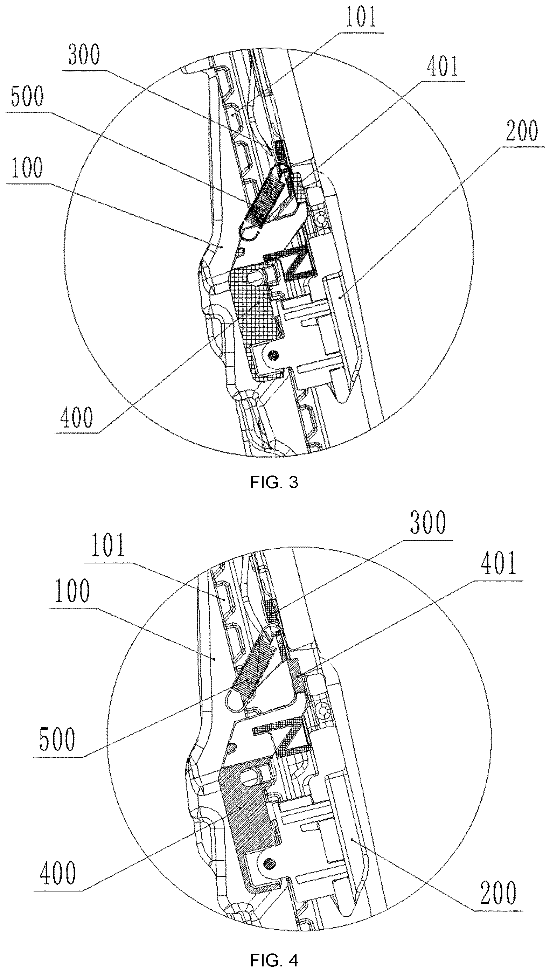

When the driving member 300 is pulled by the external force, the driving member 300 does not push the limiting member 400 to swing at the initial stage of the movement due to the existence of the free travel gap (see FIGS. 3 to 4).

The free travel gap gradually decreases during switching from the locked state to the unlocked state; and when the free travel gap decreases to zero, the locking portion 401 is disengaged from the driving member 300 (see FIG. 4). Then, the driving member 300 is further pulled, and the driving member 300 pushes the limiting member 400 to swing, so that the limiting member 400 is disengaged from the snap position 101 (see FIG. 5). In this case, the headrest 200 can be moved up and down with respect to the mounting bracket 100.

As shown in FIGS. 1 and 7, according to the present invention the driving member 300 includes: a handle ring 310, a strip 320 and a lock release slider 330, the strip 320 being connected between the handle ring 310 and the lock release slider 330, and the lock release slider 330 being slidably connected to the headrest 200. Here, the strip 320 is located between the mounting bracket 100 and the headrest 200, the third inclined surface 301 is provided on the lock release slider 330, the lock release slider 330 is provided with a through slot, and the limiting member 400 passes through the through slot, so that the locking portion 401 abuts against the lock release slider 330 in the locked state, thereby preventing the limiting member 400 from being unlocked.

As shown in FIGS. 1, 2 and 6, the mounting bracket 100 is provided with a sliding slot 102, and the sliding slot 102 extends from bottom to top. The plurality of snap positions 101 are disposed at intervals along the sliding slot 102. The limiting member 400 is slidable inside the sliding slot 102. A plurality of snap positions 101 is provided at either sides of the sliding slot 102, and the snap positions 101 on both sides are arranged opposite each other. Two snap block portions 402 on the limiting member 400 can be engaged with the snap positions 101 on both sides of the sliding slot 102 in one-to-one correspondence, thereby locking the position of the headrest 200. When the seat is assembled, the headrest 200 is located on a side of the mounting bracket 100 facing a seating area, and the driving member 300 is located between the mounting bracket 100 and the headrest 200. The driving member 300 is pulled upward, so that the headrest adjustment mechanism is switched from the locked state to the unlocked state. The limiting member 400 passes through the sliding slot 102 from the back side of the seat and is connected to the headrest 200. In the locked state, the locking portion 401 abuts against a front end face of the driving member 300, so as to restrict the limiting member 400 from moving or swinging towards the rear of the seat, thereby restricting the limiting member 400 from being unlocked, and avoiding the unlocking of the limiting member 400 due to the external collision, and the loosening of the headrest 200 due to the external collision.

As shown in Fig. 1, a seat is provided with a headrest adjustment mechanism as described in the above embodiment.

In the embodiment of the present invention, the seat has the technical effects of the headrest adjustment mechanism described above, which will not be repeated here.

Finally, it should be noted that the foregoing embodiment is only used to illustrate the technical solutions of the present invention, but not to limit them; although the present invention has been described in detail with reference to the foregoing embodiment, those of ordinary skill in the art should understand that it is still possible to modify the technical solutions described in the foregoing embodiment, as long as they remain within the scope of the appended claims.

## Claims

1. A headrest adjustment mechanism, comprising: a mounting bracket (100), a headrest (200), a driving member (300) and a limiting member (400), wherein
the headrest (200) is movably connected to the mounting bracket (100);
the mounting bracket (100) is provided with a plurality of snap positions (101) adapted to the limiting member (400), and the plurality of snap positions (101) are disposed at intervals along a moving track of the headrest (200);
the limiting member (400) is provided with a locking portion (401), the limiting member (400) is movably connected to the headrest (200), and the driving member (300) is in transmission connection with the limiting member (400) to enable the headrest adjustment mechanism to have a locked state and an unlocked state;
in the locked state, the limiting member (400) is engaged with any one of the snap positions (101), and the locking portion (401) is engaged with the driving member (300), so as to restrict a movement of the limiting member (400);
in the unlocked state, the locking portion (401) is disengaged from the driving member (300), and the driving member (300) drives the limiting member (400) to move to disengage the limiting member (400) from the snap position (101),
the driving member (300) comprises: a handle ring (310), a strip (320) and a lock release slider (330), the strip (320) being connected between the handle ring (310) and the lock release slider (330) the lock release slider (330) being slidably connected to the headrest (200), and the strip (320) is located between the mounting bracket (100) and the headrest (200), **characterized in that** a third inclined surface (301) is provided on the lock release slider (330), the lock release slider (330) is provided with a through slot, and the limiting member (400) passes through the through slot.

2. The headrest adjustment mechanism according to claim 1, **characterized in that** an elastic device (500) is connected between the driving member (300) and the limiting member (400); and
the elastic device (500) is configured to make the limiting member (400) tend to be locked to the snap position (101) and to reset the driving member (300), so that the headrest adjustment mechanism has a tendency to switch from the unlocked state to the locked state.

3. The headrest adjustment mechanism according to claim 1, **characterized in that** the limiting member (400) is hinged to the headrest (200), and the limiting member (400) is provided with a snap block portion (402) that is adapted to the snap position (101);
in the locked state, the snap block portion (402) is engaged with the snap position (101); and in the unlocked state, the snap block portion (402) is disengaged from the snap position (101).

4. The headrest adjustment mechanism according to claim 3, **characterized in that** a first inclined surface (421) is provided at the bottom of the snap block portion (402), and the first inclined surface (421) is inclined from bottom to top in a direction close to the mounting bracket (100); and
under the condition in which the locking portion (401) is disengaged from the driving member (300) and the headrest (200) is pressed under an external force, the headrest (200) drives the limiting member (400), and the first inclined surface (421) abuts against the snap position (101), so as to move the snap block portion (402) in a direction of disengagement from the snap position (101).

5. The headrest adjustment mechanism according to claim 1, **characterized in that** the limiting member (400) is provided with a second inclined surface (403), and the second inclined surface (403) faces the driving member (300); and,
the driving member (300) is provided with the third inclined surface (301), and the third inclined surface (301) faces the limiting member (400); and
the second inclined surface (403) and the third inclined surface (301) are inclined away from an unlocking direction of the limiting member (400) from bottom to top.

6. The headrest adjustment mechanism according to claim 5, **characterized in that** in the locked state, there is a free travel gap between the driving member (300) and the limiting member (400); and
the free travel gap is located between the second inclined surface (403) and the driving member (300), between the third inclined surface (301) and the limiting member (400), or between the second inclined surface (403) and the third inclined surface (301).

7. The headrest adjustment mechanism according to claim 6, **characterized in that** the free travel gap gradually decreases during switching from the locked state to the unlocked state; and when the free travel gap decreases to zero, the locking portion (401) is disengaged from the driving member (300).

8. The headrest adjustment mechanism according to claim 1, **characterized in that** the mounting bracket (100) is provided with a sliding slot (102), and the sliding slot (102) extends from bottom to top;
the plurality of snap positions (101) are disposed at intervals along the sliding slot (102); and
the limiting member (400) is slidable inside the sliding slot (102).

9. A seat, **characterized in that** the seat is provided with a headrest adjustment mechanism according to any one of claims 1 to 8.

## Patentansprüche

1. Kopfstützenverstellmechanismus, umfassend: eine Befestigungshalterung (100), eine Kopfstütze (200), ein Antriebselement (300) und ein Begrenzungselement (400), wobei
die Kopfstütze (200) beweglich mit der Befestigungshalterung (100) verbunden ist;
die Befestigungshalterung (100) mit einer Vielzahl von Rastpositionen (101) versehen ist, die an das Begrenzungselement (400) angepasst sind, und die Vielzahl von Rastpositionen (101) in Abständen entlang einer beweglichen Schiene der Kopfstütze (200) angeordnet sind; das Begrenzungselement (400) mit einem Verriegelungsabschnitt (401) versehen ist, wobei das Begrenzungselement (400) beweglich mit der Kopfstütze (200) verbunden ist und das Antriebselement (300) in Übertragungsverbindung mit dem Begrenzungselement (400) steht, um es dem Kopfstützenverstellmechanismus zu ermöglichen, einen verriegelten Zustand und einen entriegelten Zustand aufzuweisen;
in dem verriegelten Zustand das Begrenzungselement (400) in eine der Rastpositionen (101) eingerastet ist, und der Verriegelungsabschnitt (401) mit dem Antriebselement (300) eingerastet ist, so dass eine Bewegung des Begrenzungselements (400) eingeschränkt ist;
in dem entriegelten Zustand der Verriegelungsabschnitt (401) von dem Antriebselement (300) gelöst ist, und das Antriebselement (300) das Begrenzungselement (400) antreibt, um sich zu bewegen, um das Begrenzungselement (400) aus der Rastposition (101) zu lösen,
das Antriebselement (300) Folgendes umfasst: einen Griffring (310), einen Streifen (320) und einen Sperrentriegelungsschieber (330), wobei der Streifen (320) zwischen dem Griffring (310) und dem Sperrentriegelungsschieber (330) verbunden ist, wobei der Sperrentriegelungsschieber (330) gleitend mit der Kopfstütze (200) verbunden ist, und sich der Streifen (320) zwischen der Befestigungshalterung (100) und der Kopfstütze (200) befindet, **dadurch gekennzeichnet, dass** eine dritte geneigte Fläche (301) an dem Sperrentriegelungsschieber (330) vorgesehen ist, wobei der Sperrentriegelungsschieber (330) mit einem Durchgangsschlitz versehen ist, und das Begrenzungselement (400) durch den Durchgangsschlitz verläuft.

2. Kopfstützenverstellmechanismus nach Anspruch 1, **dadurch gekennzeichnet, dass** eine elastische Vorrichtung (500) zwischen dem Antriebselement (300) und dem Begrenzungselement (400) verbunden ist; und
die elastische Vorrichtung (500) so eingerichtet ist, dass das Begrenzungselement (400) dazu neigt, in der Rastposition (101) verriegelt zu werden und das Antriebselement (300) zurückzusetzen, so dass der Kopfstützenverstellmechanismus dazu neigt, von dem entriegelten Zustand in den verriegelten Zustand zu wechseln.

3. Kopfstützenverstellmechanismus nach Anspruch 1, **dadurch gekennzeichnet, dass** das Begrenzungselement (400) an der Kopfstütze (200) angeschlagen ist und das Begrenzungselement (400) mit einem Rastblockabschnitt (402) versehen ist, der an die Rastposition (101) angepasst ist;
in dem verriegelten Zustand der Rastblockabschnitt (402) mit der Rastposition (101) eingerastet ist; und
in dem entriegelten Zustand der Rastblockabschnitt (402) von der Rastposition (101) gelöst ist.

4. Kopfstützenverstellmechanismus nach Anspruch 3, **dadurch gekennzeichnet, dass** eine erste geneigte Fläche (421) an der Unterseite des Rastblockabschnitts (402) vorgesehen ist und die erste geneigte Fläche (421) von unten nach oben in eine Richtung nahe der Befestigungshalterung (100) geneigt ist; und
unter der Bedingung, dass der Verriegelungsabschnitt (401) von dem Antriebselement (300) gelöst ist und die Kopfstütze (200) unter einer äußeren Kraft gedrückt wird, die Kopfstütze (200) das Begrenzungselement (400) antreibt und die erste geneigte Fläche (421) an der Rastposition (101) anliegt, so dass der Rastblockabschnitt (402) in eine gelöste Richtung von der Rastposition (101) bewegt wird.

5. Kopfstützenverstellmechanismus nach Anspruch 1, **dadurch gekennzeichnet, dass** das Begrenzungselement (400) mit einer zweiten geneigten Fläche (403) versehen ist, und die zweite geneigte Fläche (403) dem Antriebselement (300) zugewandt ist; und, dass das Antriebselement (300) mit der dritten geneigten Fläche (301) versehen ist, und die dritte geneigte Fläche (301) dem Begrenzungselement (400) zugewandt ist; und
die zweite geneigte Fläche (403) und die dritte geneigte Fläche (301) von einer Entriegelungsrichtung des Begrenzungselements (400) von unten nach oben weg geneigt sind.

6. Kopfstützenverstellmechanismus nach Anspruch 5, **dadurch gekennzeichnet, dass** in dem verriegelten Zustand ein freier Verfahrspalt zwischen dem Antriebselement (300) und dem Begrenzungselement (400) besteht; und
der Verfahrspalt zwischen der zweiten geneigten Fläche (403) und dem Antriebselement (300), zwischen der dritten geneigten Fläche (301) und dem Begrenzungselement (400) oder zwischen der zweiten geneigten Fläche (403) und der dritten geneigten Fläche (301) liegt.

7. Kopfstützenverstellmechanismus nach Anspruch 6, **dadurch gekennzeichnet, dass** sich der Verfahrspalt bei dem Wechseln von dem verriegelten Zustand in den entriegelten Zustand allmählich verringert; und
wenn sich der Verfahrspalt auf Null verringert, wird der Verriegelungsabschnitt (401) von dem Antriebselement (300) gelöst.

8. Kopfstützenverstellmechanismus nach Anspruch 1, **dadurch gekennzeichnet, dass** die Befestigungshalterung (100) mit einem Schiebeschlitz (102) versehen ist und der Schiebeschlitz (102) sich von unten nach oben erstreckt; die Vielzahl von Rastpositionen (101) in Abständen entlang des Schiebeschlitzes (102) angeordnet sind; und
das Begrenzungselement (400) in dem Schiebeschlitz (102) verschiebbar ist.

9. Sitz, **dadurch gekennzeichnet, dass** der Sitz mit einem Kopfstützenverstellmechanismus nach einem der Ansprüche 1 bis 8 versehen ist.

## Revendications

1. Mécanisme d'ajustement d'appuie-tête, comportant : un support de montage (100), un appuie-tête (200), un organe d'entraînement (300) et un organe de limitation (400), dans lequel
l'appuie-tête (200) est relié de manière mobile au support de montage (100) ;
le support de montage (100) est pourvu d'une pluralité de positions d'encliquetage (101) adaptées à l'organe de limitation (400), et la pluralité de positions d'encliquetage (101) sont disposées à intervalles le long d'une piste de déplacement de l'appuie-tête (200) ; l'organe de limitation (400) est pourvu d'une partie de verrouillage (401), l'organe de limitation (400) est relié de manière mobile à l'appuie-tête (200), et l'organe d'entraînement (300) est en liaison de transmission avec l'organe de limitation (400) pour permettre au mécanisme d'ajustement d'appuie-tête de présenter un état verrouillé et un état déverrouillé ;
dans l'état verrouillé, l'organe de limitation (400) est engagé avec l'une quelconque des positions d'encliquetage (101), et la partie de verrouillage (401) est engagée avec l'organe d'entraînement (300), de manière à restreindre un mouvement de l'organe de limitation (400) ;
dans l'état déverrouillé, la partie de verrouillage (401) est désengagée de l'organe d'entraînement (300), et l'organe d'entraînement (300) entraîne l'organe de limitation (400) pour se déplacer pour désengager l'organe de limitation (400) de la position d'encliquetage (101), l'organe d'entraînement (300) comporte : une bague de poignée (310), une bande (320) et un coulisseau de déverrouillage (330), la bande (320) étant reliée entre la bague de poignée (310) et le coulisseau de déverrouillage (330), le coulisseau de déverrouillage (330) étant relié de manière coulissante à l'appuie-tête (200), et la bande (320) est située entre le support de montage (100) et l'appuie-tête (200), **caractérisé en ce qu'**une troisième surface inclinée (301) est prévue sur le coulisseau de déverrouillage (330), le coulisseau de déverrouillage (330) est pourvu d'une fente traversante, et l'organe de limitation (400) passe à travers la fente traversante.

2. Mécanisme d'ajustement d'appuie-tête selon la revendication 1, **caractérisé en ce qu'**un dispositif élastique (500) est relié entre l'organe d'entraînement (300) et l'organe de limitation (400) ; et
le dispositif élastique (500) est configuré pour faire en sorte que l'organe de limitation (400) ait tendance à être verrouillé dans la position d'encliquetage (101) et pour réinitialiser l'organe d'entraînement (300), de sorte que le mécanisme d'ajustement d'appuie-tête ait tendance à passer de l'état déverrouillé à l'état verrouillé.

3. Mécanisme d'ajustement d'appuie-tête selon la revendication 1, **caractérisé en ce que** l'organe de limitation (400) est articulé à l'appuie-tête (200), et l'organe de limitation (400) est pourvu d'une partie de bloc d'encliquetage (402) qui est adaptée à la position d'encliquetage (101) ;
dans l'état verrouillé, la partie de bloc d'encliquetage (402) est engagée avec la position d'encliquetage (101) ; et
dans l'état déverrouillé, la partie de bloc d'encliquetage (402) est désengagée de la position d'encliquetage (101).

4. Mécanisme d'ajustement d'appuie-tête selon la revendication 3, **caractérisé en ce qu'**une première surface inclinée (421) est prévue au bas de la partie de bloc d'encliquetage (402), et la première surface inclinée (421) est inclinée de bas en haut dans une direction proche du support de montage (100) ; et
dans la condition dans laquelle la partie de verrouillage (401) est désengagée de l'organe d'entraînement (300) et l'appuie-tête (200) est pressé par une force externe, l'appuie-tête (200) entraîne l'organe de limitation (400), et la première surface inclinée (421) vient en butée contre la position d'encliquetage (101), de manière à déplacer la partie de bloc d'encliquetage (402) dans une direction de désengagement à partir de la position d'encliquetage (101).

5. Mécanisme d'ajustement d'appuie-tête selon la revendication 1, **caractérisé en ce que** l'organe de limitation (400) est pourvu d'une deuxième surface inclinée (403), et la deuxième surface inclinée (403) fait face à l'organe d'entraînement (300) ; et, l'organe d'entraînement (300) est pourvu de la troisième surface inclinée (301), et la troisième surface inclinée (301) fait face à l'organe de limitation (400) ; et
la deuxième surface inclinée (403) et la troisième surface inclinée (301) sont inclinées à l'opposé d'une direction de déverrouillage de l'organe de limitation (400) de bas en haut.

6. Mécanisme d'ajustement d'appuie-tête selon la revendication 5, **caractérisé en ce que**, dans l'état verrouillé, il existe un espace de déplacement libre entre l'organe d'entraînement (300) et l'organe de limitation (400) ; et
l'espace de déplacement libre est situé entre la deuxième surface inclinée (403) et l'organe d'entraînement (300), entre la troisième surface inclinée (301) et l'organe de limitation (400), ou entre la deuxième surface inclinée (403) et la troisième surface inclinée (301).

7. Mécanisme d'ajustement d'appuie-tête selon la revendication 6, **caractérisé en ce que** l'espace de déplacement libre diminue progressivement lors du passage de l'état verrouillé à l'état déverrouillé ; et
lorsque l'espace de déplacement libre diminue jusqu'à zéro, la partie de verrouillage (401) est désengagée de l'organe d'entraînement (300).

8. Mécanisme d'ajustement d'appuie-tête selon la revendication 1, **caractérisé en ce que** le support de montage (100) est pourvu d'une fente de coulissement (102), et la fente de coulissement (102) s'étend de bas en haut ; la pluralité de positions d'encliquetage (101) sont disposées à intervalles le long de la fente de coulissement (102) ; et
l'organe de limitation (400) peut coulisser à l'intérieur de la fente de coulissement (102).

9. Siège, **caractérisé en ce que** le siège est pourvu d'un mécanisme d'ajustement d'appuie-tête selon l'une quelconque des revendications 1 à 8.
